Europäisches Patentamt

European Patent Office

Office européen des brevets

(11) Veröffentlichungsnummer: **0 258 333 B1**

(19)

(12) **EUROPÄISCHE PATENTSCHRIFT**

(45) Veröffentlichungstag der Patentschrift: **01.07.92**

(21) Anmeldenummer: **87901360.5**

(22) Anmeldetag: **27.02.87**

(86) Internationale Anmeldenummer:
**PCT/DE87/00075**

(87) Internationale Veröffentlichungsnummer:
**WO 87/05411 (11.09.87 87/20)**

Die Akte enthält technische Angaben, die nach
dem Eingang der Anmeldung eingereicht wurden
und die nicht in dieser Patentschrift enthalten sind.

(51) Int. Cl.⁵: $G05B\ 13/02$

(54) **ADAPTIVE REGELEINRICHTUNG HOHER GENAUIGKEIT UND GERINGEN STELLENENERGIEVERBRAUCHS.**

(30) Priorität: **28.02.86 DE 3606640**

(43) Veröffentlichungstag der Anmeldung:
**09.03.88 Patentblatt 88/10**

(45) Bekanntmachung des Hinweises auf die
Patenterteilung:
**01.07.92 Patentblatt 92/27**

(84) Benannte Vertragsstaaten:
**DE FR**

(56) Entgegenhaltungen:
**EP-A- 0 088 496**
**DE-A- 3 207 815**
**US-A- 3 961 234**

(73) Patentinhaber: **Messerschmitt-Bölkow-Blohm
Gesellschaft mit beschränkter Haftung
Robert-Koch-Strasse
W-8012 Ottobrunn(DE)**

(72) Erfinder: **SURAUER, Michael
Lindenstr. 11
W-8224 Chieming(DE)**
Erfinder: **BITTNER, Helmut
Zirlerstr. 4
W-8000 München 70(DE)**

**Beschreibung**

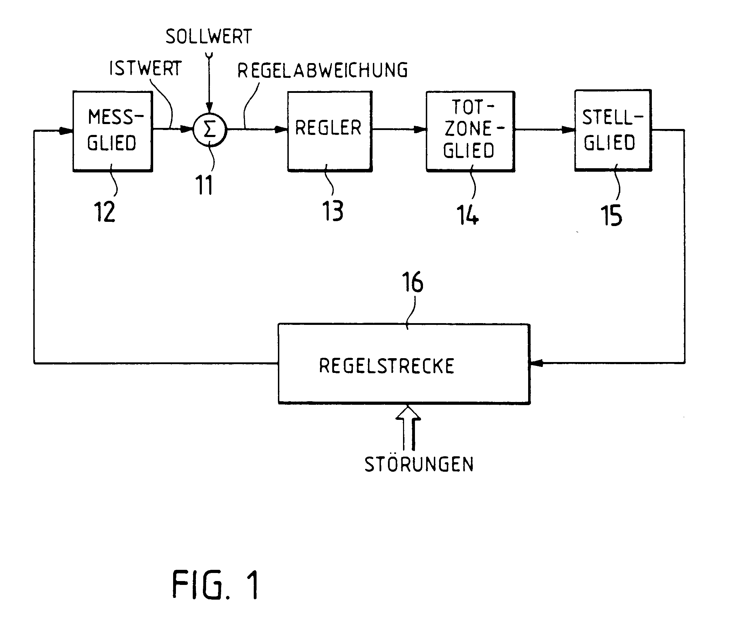

Die Erfindung befaßt sich mit der Verbesserung der Genauigkeit und Stabilität von Regelsystemen besonders niedrigen Stellenergiebedarfs. Neben den für jeden Regelkreis charakteristischen Bestandteilen, nämlich (siehe Fig. 1) einem geeigneten Meßglied (12) zur Ermittlung der Abweichungen des zu regelnden Systems, der Regelstrecke (16), von seiner Sollage, einem Reglernetzwerk (13) (oder einem dessen Funktion entsprechenden Regelalgorithmus in einer programmierbaren Digitalelektronik) und einer, für die Regelung erforderliche Kräfte bzw. Momente erzeugenden Stellgliedanordnung (15) enthalten Regelkreise geringen Stellenergieverbrauchs der hier betrachteten Art zusätzlich ein Totzoneglied (14), das überlicherweise zwischen Reglernetzwerk (13) und Stellglied (15) angeordnet ist.

Ein Totzoneglied ist in seinen Übertragungseigenschaften dadurch definiert, daß es bei Eingangsgrößen, die betragsmäßig unterhalb eines bestimmten vorgegebenen Schwellenwertes liegen, kein Ausgangssignal liefert, die Schwellenwerte überschreitende Anteile der Eingangssignale jedoch in ihrer Frequenz und Phase unverändert, in ihrer Amplitude allerdings um den konstanten Schwellenwertbetrag verringert wiedergibt.

Neben Totzonegliedern der vorstehend genannten Art gibt es noch eine Reihe von hochgradig nichtlinearen Regelkreiselementen, die zur Ausführung von Schaltfunktionen dienen, wie beispielsweise Hystereseglieder, Relais- oder 3-Punkt-Glieder, die ebenfalls vorgebene Ansprechschwellen enthalten können, wobei die Ansprechschwellen jedoch vorwiegend der Sicherstellung eindeutiger Schaltzustände dienen. Die Einführung einer künstlichen toten Zone in einen Regelkreis wirkt sich nun deswegen günstig auf den Stellenergieverbrauch aus, weil die Stellglieder nicht betätigt werden, solange die Regelabweichungen unterhalb der Ansprechschwelle des Totzonegliedes liegen. Erst wenn durch äußere Störungen oder dynamische Vorgänge im Regelkreis Abweichungen auftreten, die zum Überschreiten der Ansprechschwellen des Totzonegliedes führen, werden Kräfte und/oder Momente im Sinne einer Verringerung der Abweichung, höchstens aber nur solange ausgelöst, bis die Ansprechschwellen wieder unterschritten sind. Vor allem während Zeiträumen und Betriebszuständen, in denen äußere, auf die Regelstrecke einwirkende Störungen gering sind, wird das System relativ lange im Bereich der Totzone verweilen und keine Stellenergie verbrauchen.

Aus diesem prinzipiellen Sachverhalt geht aber auch unmittelbar hervor, daß der Absolutwert der Ansprechschwelle ein direktes Maß für die erreichbare Genauigkeit des Regelsystems darstellt und die Forderung nach Einsparung von Stellenergie und Genauigkeit sich gegenseitig widersprechen. Wird der Bereich der Totzone reduziert, so nimmt zwar Genauigkeit zu, aber es steigt auch die Häufigkeit der Stelleingriffe und damit der Energieverbrauch. Wird andererseits überhaupt keine Totzone eingeführt, so werden die Stellglieder in unerwünschter Weise bereits durch das unvermeidbare System- und Meßwertrauschen aktiviert und eine Genauigkeitserhöhung durch die zunehmende stochastische Anregung der Regelkreisdynamik begrenzt. Darüber hinaus ist der Störpegel in einem Regelungssystem, d.h. Signalrauschen und Systemdynamik, neben äußeren Störungen in hohem Maße von Umwelt- und Betriebsbedingungen abhängig, wie z.B. Temperaturschwankungen, Parametertoleranzen, Alterungsprozesse und dergleichen, was eine erhebliche Schwankungsbreite und Unsicherheit im Systemverhalten herkömmlicher Regelkreise zur Folge hat und keine den wechselnden Betriebsbedingungen optimal angepaßte, feste Einstellung einer Totzone ermöglicht. Ist nämlich eine Totzone unter Berücksichtigung insbesondere des hochfrequenten Störpegels für nominale Bedingungen einmal auf einen festen Wert eingestellt, so ändert sich die "effektive Totzone", d.h. der zwischen Störamplituden und Schwellenwert verbleibende, tatsächlich wirksame Totzonenbereich, im umgekehrten Verhältnis zur Höhe des Störrauschens und damit das Verhalten des Regelkreises bezüglich Genauigkeit und Stellenergiebedarf. Andererseits stellt in jedem Fall der wirksame Anteil einer künstlichen Totzone nicht vernachlässigbarer Größe in Regelkreisen ein wesentlich nichtlineares, insbesondere diskontinuierliches Übertragungsglied dar, das unter bestimmten Betriebsbedingungen Grenzzyklusschwingungen zur Folge hat. Bei linearen Systemen, d.h. bei Regelkreisen, deren Bestandteile - die Regelstrecke, Sensoren und Stellglieder - mit hinreichend guter Näherung durch lineare oder linearisierte Übertragungsglieder beschrieben werden können, wird deshalb die Einführung künstlicher Totzonen peinlich vermieden. In solchen Fällen wird der Einfluß des Meßwertrauschens überlicherweise durch lineare Tiefpaßfilter soweit wie möglich unterdrückt, was sich jedoch auf die Systemstabilität nachteilig auswirkt, da Tiefpaßfilter unvermeidliche Phasenverluste mit sich bringen.

Grenzzyklusschwingungen sind generell als besonders kritisch anzusehen, wenn sie in Regelkreisen auftreten, deren Regelstrecken schwingungsfähige Bauteile, insbesondere elastische Strukturelemente, enthalten. Dies ist vor allem bei Luft- und Raumfahrzeugen wegen ihrer leichten, gewichtssparenden Bauweise und/oder großen räumlichen Ausdehnung der Fall.

Wegen der extrem niedrigen Eigendämpfung solcher Strukturschwingungen neigen Regelsysteme für elastische Fahrzeuge dieser Art dazu, in Grenzzyklusschwingungen zu geraten, deren Frequenzen mit den Strukturresonanzfrequenzen zusammenfallen, was zu gefährlicher Schwingungsanregung, unzulässig hohen mechanischen Strukturbelastungen und schließlich zur Zerstörung der Fahrzeuge führen kann.

Darüber hinaus werden häufig zur Erzeugung der für die Stabilisierung erforderlichen Kräfte und/oder Momente diskontinuierlich arbeitende Stellglieder, wie Schrittmoren oder pulsförmig angesteuerte Reaktionsdüsen eingesetzt, deren sprungförmige Eingriffe in das System über ein breites Frequenzspektrum Resonanzanregungen begünstigen. Bei Lageregelungssystemen für Fahrzeuge dieser Art wurden daher sogenannte modale Regler vorgeschlagen, d.h. daß die zuvor üblichen Reglernetzwerke bzw. Algorithmen zur gleichzeitigen Schwingungsdämpfung für jede Eigenschwingungsform um einen Beobachter zweiter Ordnung und einen zugehörigen Zustandsregler erweitert werden. Abgesehen von der hohen, mit der Zahl der zu berücksichtigenden Strukturschwingungsformen steigenden Komplexität und dem Realisierungsaufwand für den Regler werden solche Konzepte in der Praxis durch unvermeidliche Fehlanpassung der Beobachter infolge Unsicherheit und Schwankungsbreite der Modalparameter weitgehend unwirksam gemacht.

In einem anderen Fall wurde zur Verhinderung der Erregung von Strukturresonanzen die Hysterese-Breite des Hysteresegliedes eines für die pulsförmige Ansteuerung von Reaktionsdüsen verwendeten Puls-Breiten-Puls-Frequenzmodulators derart adaptiv verändert, daß die Folgefrequenz der Stelleingriffe nicht mit einer Strukturresonanzfrequenz zusammenfällt. Bei diesem Verfahren werden durch den Eingriff in ein hochgradig nichtlineares Element des Modulatorkreises, nämlich sein Hystereseglied, gleichzeitig die Amplituden- und Phasenverhältnisse in einer für den Regelungstechniker schwer überschaubaren und nur durch aufwendige, nichtlineare Analyseverfahren angenähert bestimmbaren Weise verändert.

Eine Regeleinrichtung der eingangs genannten Art ist aus der DE-A1-32 07 815 bekannt. Dort ist ein Regler dargestellt, welcher als wesentliches Element ein Totzoneglied enthält. Dessen Totzone wird über ein Adaptationsglied nach gewissen Kriterien verändert, mit einer entsprechenden Anpassung der Ansprechschwellen. Dem Adaptationsglied wird das Eingangssignal des Totzonegliedes zugeführt, welches für den Fall, daß die Stellgröße nicht zurückgeführt wird, der Regelabweichung entspricht. Das Adaptationsglied arbeitet also in Abhängigkeit von der Regelabweichung, um die Veränderung der Totzone zu bewirken. Das entsprechende Anpaßsignal für die Veränderung der Totzone wird mit Hilfe einer Schaltungsanordnung gebildet, welche vor allem von Zeitgliedern und logischen Verknüpfungsgliedern Gebrauch macht. Es ist beabsichtigt, die Totzone automatisch an die sich ändernde Regelstreckenverstärkung anzupassen. Bei gegebener kleinstmöglicher Stellwegänderung soll die Totzone direkt proportional der Regelstreckenverstärkung sein.

Demgegenüber liegt der Erfindung die Aufgabe zugrunde, eine Regeleinrichtung der eingangs genannten Art mit möglichst einfachen Mitteln zu schaffen, die unabhängig von den jeweils gerade herrschenden Betriebs- und Umweltbedingungen und den damit verbundenen Schwankungen der Parameter und Signalverhältnisse eine gleichbleibend hohe Regelgüte, d.h. hohe Genauigkeit und geringen Stellenergiebedarf, sicherstellen, ohne daß gleichzeitig eine Verschlechterung der Stabilitätsverhältnisse oder gar eine mögliche Resonanzerregung schwingungsfähiger Regelstrecken in Kauf genommen werden muß.

Diese Aufgabe wird gemäß der Erfindung durch die in den kennzeichnenden Teilen der Patentansprüche 1 und 2 aufgeführten Merkmale gelöst.

Vorteilhafte Ausführungsformen der Erfindung sind den Unteransprüchen zu entnehmen.

Im folgenden werden Ausführungsbeispiele der Erfindung anhand von Abbildungen näher erläutert. Es zeigen in schematischer Weise:

Fig. 1 Ein Blockschaltbild einer Regeleinrichtung hoher Genauigkeit und geringen Stellenergiebedarfs herkömmlicher Bauart,

Fig. 2 eine Eingangs-/Ausgangscharakteristik eines Totzonegliedes bekannter Bauart,

Fig. 3 ein Funktionsschaltbild für ein Totzoneglied bekannter Bauart,

Fig. 4 ein Ausführungsbeispiel eines anpaßbaren Totzonegliedes gemäß der Erfindung,

Fig. 5 eine Eingangs-/Ausgangscharakteristik eines Totzonegliedes bzw. adaptiven Proportionalglieds mit anpaßbarer Kennliniensteigung zwischen den Ansprechschwellen gemäß der Erfindung,

Fig. 6 ein Blockschaltbild eines Regelkreises mit einer Regeleinrichtung gemäß der Erfindung,

Fig. 7 ein Blockschaltbild eines Regelkreises nach einer weiteren Ausführungsform der Erfindung,

Fig. 8 ein Funktionsschaltbild für ein Ausführungsbeispiel der erfindungsgemäßen Regeleinrichtung,

Fig. 9 eine weitere Regelvorrichtung nach der Erfindung.

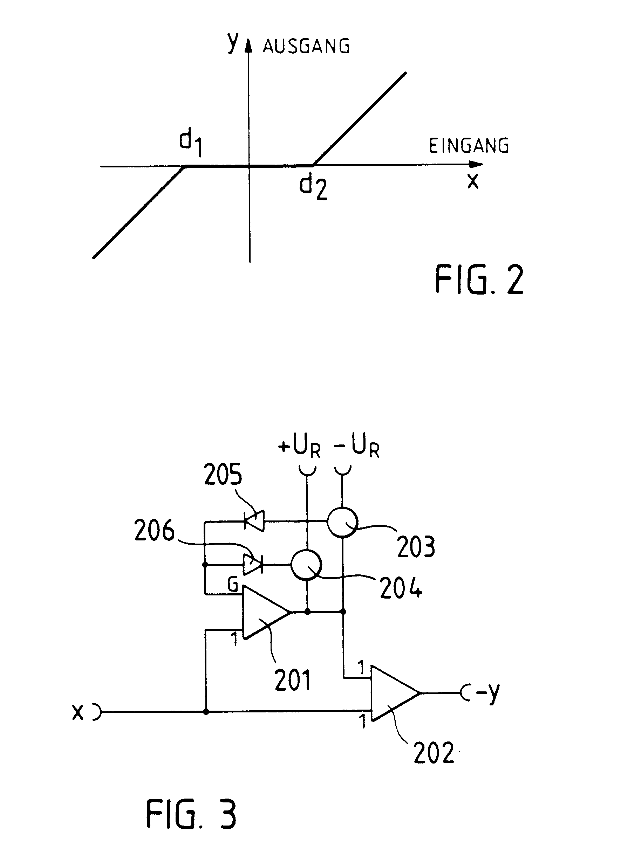

Der prinzipielle Aufbau eines herkömmlichen Regelkreises geringen Stellenergiebedarfs gemäß Fig. 1 und seine Wirkungsweise wurden bereits eingangs beschrieben. Die Übertragungskennlinie eines Totzonegliedes ist in Fig. 2 wiedergegeben. Seine mathematische Funktionsdefinition lautet:

$$y = \begin{cases} x - d_1 & \text{für} \quad x < d_1 < 0 \\ 0 & \text{für} \quad d_1 \leqq x \leqq d_2 \\ x - d_2 & \text{für} \quad x > d_2 > 0 \end{cases} \quad (1)$$

Bei Realisierung der Totzone als Algorithmus in einer programmierbaren, digitalen Reglerelektronik gibt diese mathematische Funktionsdefinition unmittelbar die Rechenvorschrift an. Fig. 3 zeigt eine mögliche gerätetechnische Realisierung eines herkömmlichen Totzonegliedes mit festen Ansprechschwellen ($d_1$, $d_2$) unter Verwendung von Operationsverstärkern (201,202), Rückführpotentiometern (203,204) und Dioden (205,206). Für die positive Ansprechschwelle ($d_2$) ist der Einstellwert des Potentiometers (204) maßgebend, das zwischen dem Ausgang eines invertierenden Operationsverstärkers (201) und einer festen, positiven Referenzspannung ($+U_R$) liegt und dessen Abgriff über eine bezüglich der anliegenden Referenzspannung in Sperrichtung gechaltete Diode (206) direkt, d.h. ohne Vorwiderstand auf den Eingang (G) dieses ersten Operationsverstärkers (201) zurückgeführt ist. Beide Operationsverstärker (201,202) sind, was in Fig. 3 nicht eigens gezeigt ist, in ihren mit "1" bezeichneten invertierenden Eingängen zusätzlich mit gleich großen Widerständen, d.h. als einfache Summierverstärker beschaltet.

Für positive Eingangssignale x unterhalb der Ansprechschwelle $d_2$ sperrt die Diode (206) und das (negative) Ausgangssignal y bleibt Null, da sich die beiden gleich großen Signale (x) am Eingang des zweiten Operationsverstärkers (202) über die direkte Verbindung einerseits sowie über den Umkehrverstärker (201) andererseits gerade aufheben. Wenn die Eingangsgröße x des Totzonegliedes den Schwellenwert $d_2$ gerade erreicht, liegt am Ausgang des ersten Operationsverstärkers (201) der invertierte Wert -$d_2$ an und bewirkt, daß das Potential am Abgriff des angeschlossenen Potentiometers (204) gerade durch Null geht, wodurch die dort angeschlossene Diode (206) leitend wird und den Rückführwiderstand des Operationsverstärkers (201) kurzschließt. Dadurch bleibt auch für höhere Eingangssignale (x - $d_2$) das Ausgangssignal des ersten Operationsverstärkers (201) konstant auf dem negativen Schwellenwert -$d_2$ stehen und wird im nachgeschalteten zweiten Operationsverstärker (202) vom Eingangswert subtrahiert. Für negative Eingangssignale x des Totzonegliedes ergeben sich analoge Verhältnisse unter Berücksichtigung des über ein zweites Potentiometer (203) eingestellten Schwellenwertes $d_1$ und einer daran angeschlossenen zweiten Diode (205).

Die Ansprechschwellen $d_1$, $d_2$ des Totzonegliedes sollen gemäß der Erfindung veränderbar sein. Dies kann z.B. dadurch geschehen, daß die Rückführpotentiometer (203,204) nach Fig. 3 über einen Servomotor entsprechend der folgenden Einstellvorschrift nach vorgegebenen Funktionsverläufen für die Schwellenwerte $d_1$, $d_2$ verändert werden:

$$\text{Pot. 203:} \quad P_3 = d_1/(d_1 + U_R) \quad (2)$$
$$\text{Pot. 204:} \quad P_4 = d_2/(d_2 + U_R)$$

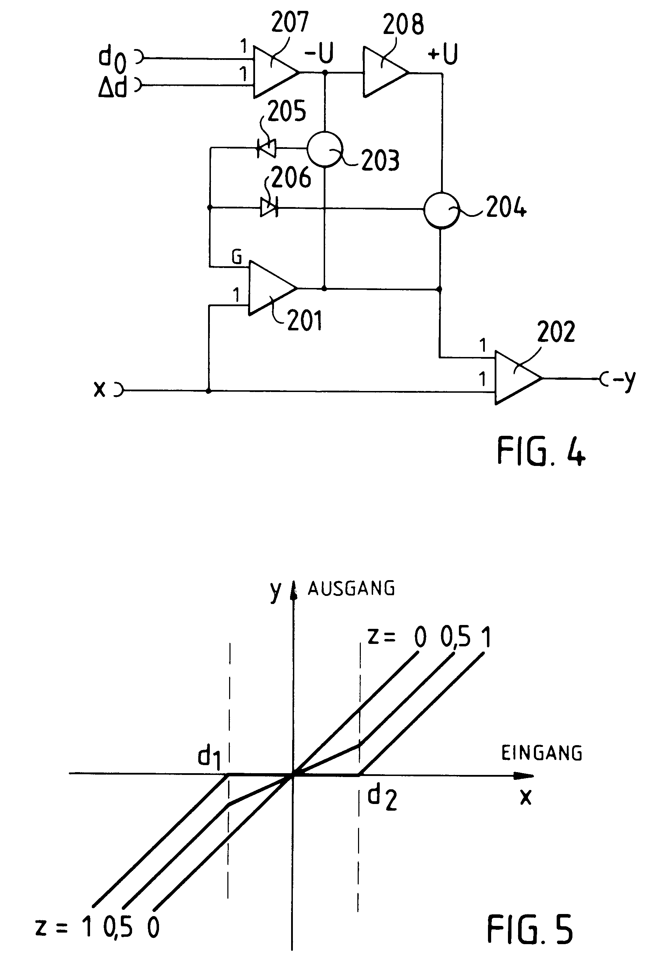

In Fig. 4 ist das Prinzipschaltbild einer wesentlich einfacheren Möglichkeit zur Realisierung anpaßbarer Ansprechschwellen für den vereinfachten Fall betragsmäßig gleicher positiver und negativer Schwellenwerte ($d_1$ = $d_2$ = d) gezeigt. Sind die Potentiometerwerte (P) für den niedrigsten Schwellenwert ($d_0$) unter Annahme einer zugehörigen Referenzspannung ($U_0$) festgelegt, so verschieben sich, wie eine einfache mathematische Umformung zeigt (Gleichung 3), bei unverändertem Potentiometerwert (P) die Ansprechschwellen (d) um einen Wert ($\Delta d$), proportional zur Änderung der Referenzspannung ($\Delta U$):

$$\text{Pot. 203, 204:} \quad P = d_0/(d_0 + U_0) \qquad\qquad (3)$$
$$d = PU/(1-P)$$

$$d = d_0 + \Delta d \qquad\qquad d_0 = PU_0/(1-P)$$
$$U = U_0 + \Delta U \qquad\qquad \Delta d = P\Delta U/(1-P)$$

Nominalwert ($d_0$) und Änderung ($\Delta d$) der Schwellwerte (d) können damit über zusätzliche Verstärker (207,208) unter Beachtung der Vorzeichen in einfacher Weise als Signalspannungsänderungen erzeugt und eingegeben werden. Nach dem gleichen Prinzip können natürlich auch die positiven und negativen Schwellenwerte im Bedarfsfall getrennt und verschieden voneinander angepaßt werden, indem man entsprechend verschiedene Referenzspannungsänderungen ($\Delta U_1$, $\Delta U_2$) anlegt.

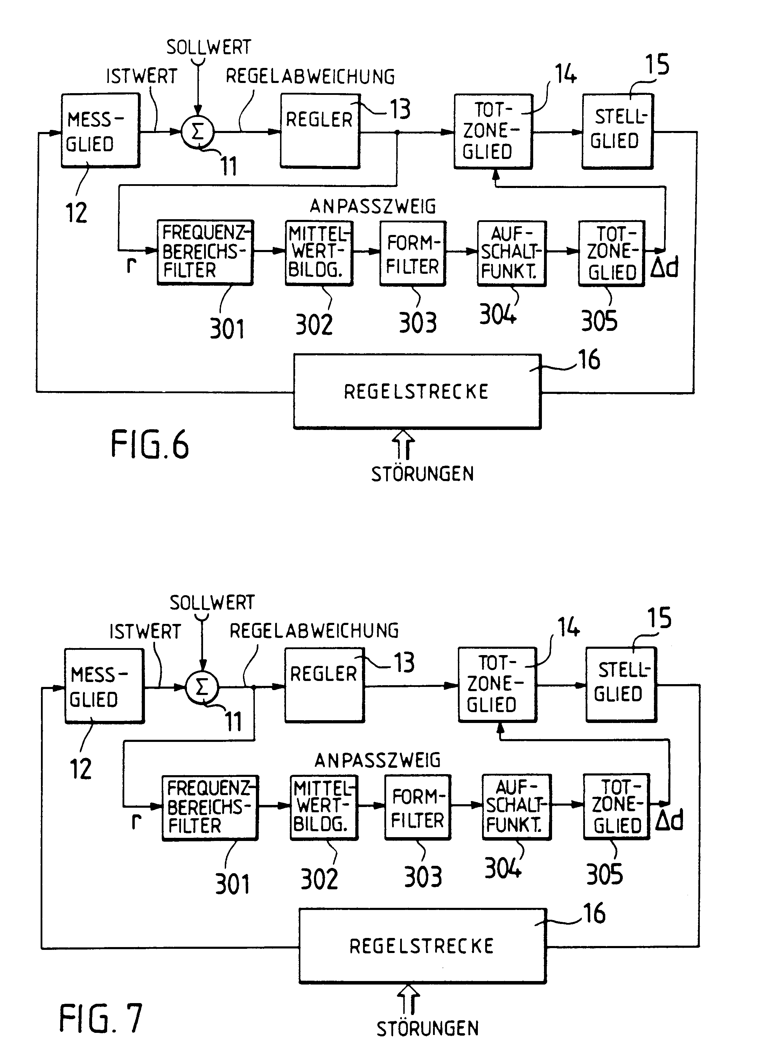

Fig. 6 zeigt das Prinzipschaltbild einer verbesserten Regeleinrichtung gemäß der Erfindung. Der Regelkreis nach Fig. 1 ist dabei erweitert um einen Anpaßzweig, der vom Reglerausgangssignal gespeist wird und dessen Ausgangssignal seinerseits dazu benutzt wird, die Ansprechschwellen im Totzoneglied des Hauptkreises beispielsweise gemäß Fig. 4 zu verschieben. Der Anpaßzweig selbst besteht aus einem Frequenzbereichsfilter (301), einem Mittelwertbildner (302), einem Formfilter (303), einer Aufschaltfunktion (304) und eventuell einem Totzoneglied (305) bekannter Art (z.B. Fig. 2,3) mit fest vorgegebenen Ansprechschwellen.

Das Frequenzbereichsfilter (301) dient zur Festlegung der Frequenzgrenzen, innerhalb derer eine Anpassung der Totzone im Hauptregelkreis erfolgen soll. Vorzugsweise werden hier Hochpaßfilter, Bandpaßfilter, aber auch Tiefpaßfilter und je nach Anwendungsfall Kombinationen der genannten Filterarten in geeigneter Serien-/oder Parallelschaltung eingesetzt. Die Frequenzbereichsfilter können die Übertragungsfunktion des Reglers (13) ganz oder teilweise enthalten. Für die Mittelwertbildung (302) kommen alle Schaltungen oder Bauelemente infrage, die geeignet sind, aus dem Frequenzgemisch am Ausgang der Frequenzbereichsfilter (301) von Null verschiedene Mittelwerte oder Gleichanteile zu bilden, wie beispielsweise Einweggleichrichter, Doppelweggleichrichter, Spitzenwertgleichrichter, sowie gerade Potenzen ihres Eingangssignals bildende Funktionselemente, wie Quadrierer und dergleichen.

Im nachfolgenden Formfilter (303) des Anpaßzweiges gemäß Fig. 6 wird das Ausgangssignal des Mittelwertbildners geglättet bzw. es werden Signalanteile unerwünschter, z.B. hoher Frequenzen unterdrückt, wozu sich Tiefpaßfilter erster und höherer Ordnung oder Bandsperren im besonderen Maße eignen.

Durch die Aufschaltfunktion (304) des Anpaßzweiges wird festgelegt, nach welchem funktionalen Zusammenhang die Ansprechschwellen des Totzongliedes im Hauptregelkreis angepaßt werden sollen. Im einfachsten Fall kann es sich dabei um eine einfache lineare Verstärkungskennlinie mit Ausgangssignalbegrenzung handeln, wobei die Begrenzung sicherstellt, daß keine unerwünscht großen Erweiterungen des Totzonebereichs und damit verbundene Einbußen an Regelgenauigkeit auftreten können. Im allgemeinen Fall werden jedoch geeignete nichtlineare Verstärkungskennlinien wie z.B. inverse quadratische Kennlinien entsprechend Quadratwurzelfunktionen, logarithmische Kennlinien oder -funktionen und dergleichen zweckmäßiger seien, um den jeweiligen Anforderungen gerecht zu werden. In vielen Fällen empfiehlt es sich erfindungsgemäß, der Aufschaltfunktion ein Totzoneglied (305) mit unveränderlichen Ansprechschwellen nachzuschalten zur Unterdrückung der unvermeidbaren Restwelligkeit des Anpaßsignals sowie um einen definierten unteren Schwellenwert des anpaßbaren Totzongliedes (14) im Hauptregelkreis sicherzustellen. Dieses zusätzliche Totzoneglied kann im jeweiligen Anpaßzweig auch zwischen dem Frequenzberichsfilter und dem Mittelwertbildner, zwischen dem Mittelwertbildner und dem Formfilter oder zwischen dem Formfilter und der Aufschaltfunktion eingeschaltet sein.

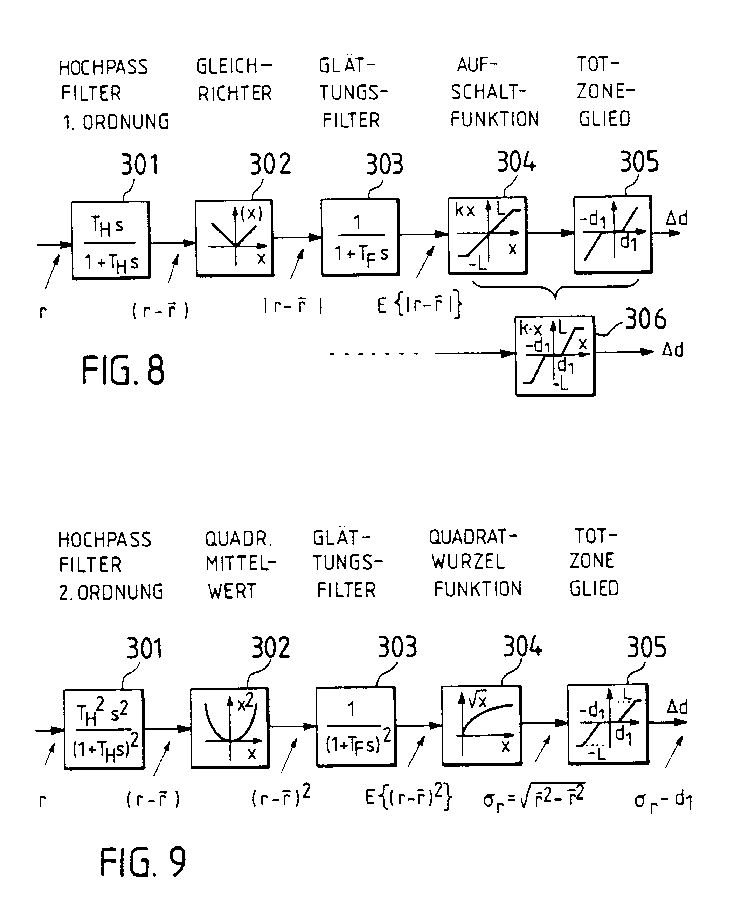

In den Fig. 8 und 9 sind zwei Ausführungsbeispiele der erfindungsgemäßen Anpaßkreise gezeigt. Zur Verdeutlichung der vorstehend beschriebenen Funktionseigenschaften sind die einzelnen Schaltkreiselemente in Form von Übertragungsfunktionen bzw. Eingangs-/Ausgangskennlinien darstellt.

Fig. 8 zeigt einen Anpaßzweig einfachster Ausführung, bestehend aus einem Hochpaßfilter erster Ordnung als Frequenzbereichsfilter (301), einem Doppelweggleichrichter (302) als Mittelwertbildner, einem Tiefpaß erster Ordnung als Formfilter (303), einem Verstärker mit einem allgemeinen Verstärkungsfaktor K und einer Amplitudenbegrenzung L als Aufschaltfunktion (304), sowie einem nullpunktsymmetrischen Totzoneglied (305) mit gleichen positiven und negativen Ansprechschwellen ($\pm d_1$).

In Fig. 9 besteht der Anpaßzweig aus einem Hochpaß zweiter Ordnung als Frequenzbereichsfilter (301), einem Quadrierer zur Mittelwertbildung (302), einem Tiefpaß zweiter Ordnung als Formfilter (303), einer Quadratwurzelbildung als Aufschaltfunktion (304) und einem nachfolgenden Totzoneglied (305) mit Ausgangssignalbegrenzung (L).

In den beiden Ausführungsbeispielen der Figuren 8 und 9 werden durch die Hochpässe als Frequenzbereichsfilter aus ihren Eingangssignalen r durch Unterdrückung der niederfrequenten Anteile Signale gebildet, die der

Abweichung (r -r) vom linearen Mittelwert oder Erwartungswert (E{r} = r) entsprechen. Durch die nachfolgenden, nichtlinearen Operationen der Gleichrichtung bzw. Quadrierung im Mittelwertbildner (303) entstehen erneut Gleichstromanteile bzw. Effektivwerte, die von hochfrequenten Signalanteilen überlagert sind. Durch die Tiefpässe als Formfilter (303) werden die hochfrequenten Signalanteile unterdrückt, was der Bildung eines Erwartungswertes (E{|r-$\bar{r}$|}, E{(r-$\bar{r}$)$^2$}) entspricht. Nach Fig. 8 werden die Ansprechschwellen des Totzonegliedes (14) im Hauptregelkreis proportional (Faktor K) zu dem gewonnenen Signal bis zu einem vorgegebenen Maximalwert L verändert, der die zulässige Erweiterung der Totzone nach oben begrenzt, während die untere Schwelle des adaptiven Eingriffs durch das nachgeschaltete, auf feste Werte eingestellte Totzoneglied (305) festgelegt wird.

Durch die Form der Aufschaltfunktion (304) entsprechend einer Quadratwurzelfunktion nach Fig. 9 erfolgt die Anpassung der Ansprechschwellen im Hauptregelkreis für alle Signale aus dem ausgewählten Frequenzspektrum entsprechend der "Varianz" ($\sigma_r$), wenn es sich um statistische Schwankungsgrößen handelt oder gemäß dem "Effektivwert" bei sinusförmigen Signalanteilen.

Auf das fest eingestellte Totzoneglied (305) im Anpaßzweig kann bei entsprechend großer Dämpfung der unerwünschten Signalanteile im Formfilter in vielen Fällen verzichtet werden. Bei anderen Anwendungen empfiehlt es sich, die Reihenfolge der Schaltkreiselemente Totzoneglied (305) und Aufschaltfunktion (304) zu vertauschen oder entsprechend Fig. 8 zu einem einzigen in der Funktion äquivalenten Übertragungsglied (306) zusammenzufassen.

Die gerätetechnische Ausführung der vorstehend in ihrer Wirkungsweise und ihren Übertragungseigenschaften beschriebenen Funktionselemente des Anpaßzweiges wie Filter, Gleichrichter, lineare und nichtlineare Eingangs/Ausgangskennlinien bereitet dem Fachmann keinerlei Schwierigkeiten. Die Umsetzung der in analoger Darstellung gegebenen Filterübertragungsfunktionen und Übertragungskennlinien in entsprechende Digitalschaltungen oder Algorithmen für Prozeßrechner als Reglerelektronik ist dem Fachmann gleichermaßen geläufig. Übertragungsfunktionen sind durch Lösung der sie repräsentierenden linearen Differentialgleichungen mittels numerischer Integrationsverfahren oder über Transitionsmatrizen in einfacher Weise darstellbar. Für die Realisierung logischer Funktionen, nichtlinearer Kennlinien und algebraischer Rechenoperationen wie Quadrieren, Wurzelziehen usw. sind digitale Hilfsmittel im allgemeinen ohnehin besser geeignet als analoge. In vielen Fällen genügt es, statt anspruchsvoller und zeitaufwendiger Rechnerroutinen in bekannter Weise einfache Näherungen zu verwenden wie beispielsweise Ersetzen der Integration einer Signalgröße r durch Summation über eine genügend große Anzahl N von Abtastwerten zur Bildung von Mittelwerten oder Erwartungswerten (E{r}, E{(r-$\bar{r}$)$^2$}) entsprechend der Vorschrift:

$$E\{r\} = \bar{r} = \frac{1}{T} \int_0^T r(t)dt = \frac{1}{N} \sum_{i=1}^N r(t_i) = \frac{1}{N} \sum_{i=1}^N r_i \qquad (4)$$

für den linearen Mittel- oder Erwartungswert bzw.

$$E\{(r-\bar{r})^2\} = \sigma_r^2 = \frac{1}{T} \int_0^T (r-\bar{r})^2 dt = \frac{1}{N} \sum_{i=1}^N (r_i - \bar{r})^2 \qquad (5)$$

für den quadratischen Mittel- oder Erwartungswert, wobei $r_i$ = r($t_i$) die Funktionswerte r zu den Abtastzeitpunkten $t_i$ darstellt.

In anderen Fällen empfiehlt sich die Verwendung von Iterationsverfahren und/oder Rekursionsformeln, wie z.B. zur Bildung der Quadratwurzelfunktion die itera- tive Lösung einer Beziehung der Form:

$$x_{n+1} = \frac{1}{2}(x_n + \frac{a}{x}\,n) \qquad (6)$$

wobei a das Argument der Funktion, $x_n$ das Ergebnis des vorhergehenden ↔terationsschrittes und $x_{n+1}$ den verbesserten Funktionswert von $\sqrt{a}$ bedeuten. Als Anfangswert (n = 0) kann ebenfalls das Argument a der Funktion verwendet und die Iteration abgebrochen werden, wenn die Änderung des Funktionswertes ($x_{n+1}$ - $x_n$) zweier aufeinanderfolgender Iterationsschritte unter eine vorgegebene Genauigkeitsschranke sinkt.

Regeleinrichtungen gemäß der Erfindung, die mit adaptiven Totzonegliedern und deren Ansprechschwellen steuernden Anpaßzweigen ausgestattet sind, weisen gegenüber herkömmlichen Einrichtungen erhebliche Vorzüge auf und sind gleichermaßen für lineare als auch hochgradig nichtlineare Regelsysteme einsetzbar. Durch die im Anpaßzweig vorgenommene Analyse, Bewertung und Gewichtung der Signalanteile des Hauptregelkreises über ausgewählte Frequenzbereiche und Anpassung des Totzonebereichs an die jeweils gerade herrschenden Verhältnisse läßt sich im allgemeinen eine beträchtliche Verbesserung, mindestens aber auch bei wechselnden Betriebs- und Umweltbedingungen gleichbleibende Güte des Regelverhaltens erzielen.

Wird z.B. entgegen der herkömmlichen Praxis in ein lineares Regelsystem eine adaptive Totzone eingeführt und ihr unterster einstellbarer Wert kleiner oder gleich der Varianz $\sigma$, d.h. dem sogenannten Ein- (bzw. Zwei-) -$\sigma$-wert des unter allen Betriebsbedingungen zu erwartenden niedrigsten System- und Meßwertrauschens gewählt, so werden die höheren Amplituden der hochfrequenten Störungen die Ansprechschwellen des Totzonegliedes im Hauptkreis immer überschreiten und damit einen Linearisierungseffekt erzeugen, der die Totzone effektiv nicht in Erscheinung treten läßt, die Linearität des Kreises praktisch nicht beeinflußt, keine unerwünschten Grenzzyklusschwingungen zur Folge hat und trotzdem eine erhebliche Reduktion des Störpegels bewirkt, der bei stochastischen Störungen mit Gaussverteilung 68 % bzw. 95,5 % beträgt und sich auf die Systemdynamik und den Stellenergieverbrauch vorteilhaft auswirkt. Erhöht sich infolge der Betriebsbedingungen, z.B. durch Temperaturschwankungen, der Störpegel, so wird die Totzone bei entsprechender Ausbildung des Anpaßzweiges nachgeregelt und damit das günstige Regelkreisverhalten weiterhin sichergestellt.

Nichtlineare Regelsysteme, die z.B. aus Gründen der Einsparung an Stellenergie oder der Verwendung diskontinuierlich arbeitender Stellglieder wie pulsförmig angesteuerter Reaktionsdüsen bewußt mit einer wirksamen Totzone ausgestattet sind, lassen sich bei Anwendung der erfindungsgemäßen adaptiven Regeleinrichtung optimal auf das gewünschte Verhalten bezüglich Genauigkeit, Stellenergieverbrauch, Grenzzyklusfrequenz und Amplitude einstellen, da der wirksame, zwischen Störpegel und den Ansprechschwellen verbleibende Anteil der Totzone auch bei Änderungen des Meßwertrauschens und der Regelkreisdynamik infolge der automatischen Anpassung erhalten bleibt.

Bei Regelungssystemen dieser Art werden die elektrischen Ansteuerimpulse für die diskontinuierlich arbeitenden Stellglieder, wie Schrittmotoren oder Reaktionsdüsen, häufig durch spezielle Modulatorkreise, wie Puls-Weiten- , Puls-Frequenz- (PWPF-) Modulatoren oder sog. "Pseudorate" (PR-) Modulatoren erzeugt, die ein Dreipunktglied mit Hysterese enthalten. Um den Realisierungsaufwand bei sinngemäßer Anwendung des Erfindungsgedankens so gering wie möglich zu halten, wird der adaptive Eingriff zweckmäßigerweise unmittelbar in das Dreipunktglied so vorgenommen, daß die Ansprechschwellen und die Abschaltschwellen des Hsterese-Dreipunktgliedes gleichermaßen nach Maßgabe des Anpaßsignals gleichsinnig verschoben werden, so daß die Hysteresebreite unverändert bleibt.

Trotz des Eingriffs in ein so hochgradig nichtlineares Element wie das Dreipunkt-Hystereseglied ändern sich durch die Maßnahme der adaptiven Parallelverschiebung von Ansprechschwelle und Abfallschwelle die Amplituden- und Phasenverhältnisse im Modulatorkreis nicht, da die Phasenverhältnisse lediglich von der Breite der Hystereseschleife abhängen, und die effektiv wirksame Totzone ebenfalls erhalten bleibt. Damit behält der nichtlineare Modulatorkreis in überschaubarer Weise auch seine dynamischen Eigenschaften.

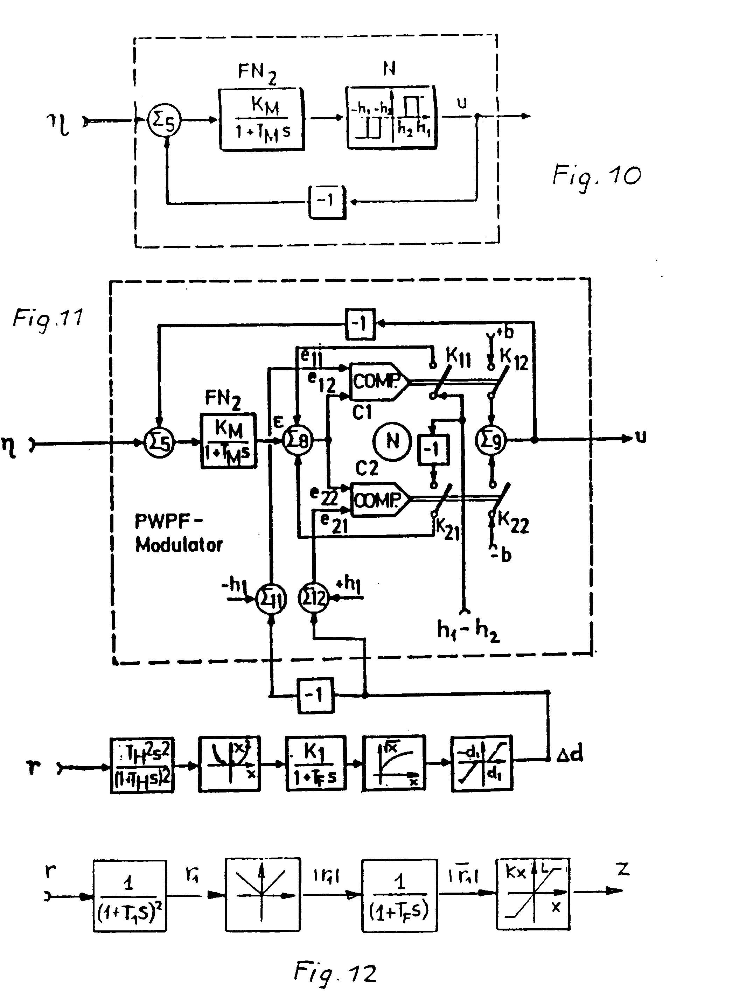

Fig. 10 zeigt ein regelungstechnisches Blockschaltbild eines herkömmlichen und Fig. 11 ein Funktionsschaltbild eines adaptiven PWPF-Modulators der genannten Art. Im oberen Teil von Fig. 11 ist der normale, nicht adaptive PWPF-Modulator, bestehend aus dem Modulatornetzwerk FN2, dem nichtlinearen Hysterese-Dreipunktglied N und der negativen Rückführung des Ausgangssignals u auf die Summierstelle $\Sigma_5$ am Eingang $\eta$ dargestellt. Zur Realisierung der Hysteresecharakteristik N dienen im wesentlichen zwei Komparatoren $C_1$, $C_2$, von denen der obere $C_1$ die daran angeschlossenen Kontakte $K_{11}$, $K_{12}$ dann schließt, wenn die Summe der beiden Eingänge von $C_1$ positiv wird, und der untere $C_2$ die daran angeschlossenen Kontakte $K_{21}$, $K_{22}$ schließt, wenn die Summe seiner Eingänge negativ wird. An jeweils einem der beiden Komparatoreingänge $e_{11}$; $e_{21}$ liegt ein fester Wert an, nämlich die Hystereseansprechschwelle -$h_1$ an $C_1$ und +$h_1$ an $C_2$. Der jeweils andere Eingang $e_{12}$, $e_{22}$ wird über das Eingangssignal $\eta$ und die Hysteresisbreite $h_1$-$h_2$ gesteuert. Ist das Eingangssignal $\eta$ z.B. positiv, so läuft der gesteuerte Eingang $e_{12}$ des oberen Komparators $C_1$ mit der Verzögerung des Modulatornetzwerkes FN2 hoch, bis der Betrag des Schwellwertes -$h_1$ erreicht wird und der Komparator $C_1$ anspricht. Durch das damit verbundene Schließen des einen Kontaktes $K_{11}$ wird ein Signal, das der Hysteresisbreite $h_1$-$h_2$ entspricht, über ein Summierglied $\Sigma_8$ auf den gesteuerten Komparatoreingang $e_{12}$ zurückgeführt. Mit dem zweiten Kontakt $K_{12}$ wird gleichzeitig das Impulssignal b über das Summierglied $\Sigma_9$ auf den Ausgang u gelegt und über die negative Rückführung im

7

Summierjglied $\Sigma_5$ vom Eingangssignal $\eta$ abgezogen. Die (negative) Differenz $\eta$ - b führt über das Modulatornetzwerk FN2 und das Summierglied $\Sigma_8$ zu einer verzögerten Abnahme des gesteuerten Eingangs $e_{12}$ des Komparators $C_1$. Der Komparator $C_1$ fällt wieder ab und öffnet damit wieder die angeschlossenen Kontakte $K_{11}$, $K_{12}$, wenn die Summe seiner Einjgänge $-h_1 + h_1 - h_2 + \epsilon$ den Wert Null erreicht. Das ist dann der Fall, wenn das Ausgangssignal $\epsilon$ des Modulatornetzwerkes FN2 die Abfallschwelle $\epsilon$ = $h_2$ erreicht. Gleichzeitig fällt das Modulatorausgangssignal u auf Null zurück und beendet damit den Stelleingriff. Der Vorgang wiederholt sich regelmäßig, wenn das Ëingangssignal $\eta$ positiv bleibt, wobei ein konstantes Eingangssignal $\eta$ eine Folge von Pulsen konstanter Breite und Frequenz hervorruft. Entsprechendes gilt bei negativen Eingangssignalen mit Hilfe des anderen Komparators $C_2$ und den zugehörigen Kontakten $K_{21}$, $K_{22}$. Der Anpaßkreis zur Realisierung der in ihrer Auswirkung bereits beschriebenen adaptiven Maßnahme ist in Fig. 11 unten schematisch dargestellt und wirkt auf die symmetrisch zum Nullpunkt liegenden Totzone-Ansprechschwellen ($+h_1$, $-h_1$) ein. Da der Einstellwert der Hysteresebreite $h_1 - h_2$ dadurch nicht beeinflußt wird, verschieben sich auch die Abfallschwellen ($+h_2$, $-h_2$) um den gleichen Betrag vorzeichenrichtig.

Besonders vorteilhaft läßt sich die erfindungsgemäße Einrichtung bei der Stabilisierung von Regelstrekken einsetzen, die wegen ihrer konstruktiven Gestaltung, ihrer Materialeigenschaften, ihrer leichten, gewichtssparenden Bauweise und/oder ihres hohen Schlankheitsgrades Strukturschwingungen, insbesondere mit geringem passivem Dämpfungsmaß, aufweisen. Liegen durch geeignete Wahl der Eckfrequenzen diese Schwingungen im Durchlaßbereich der Frequenzbereichsfilter und werden die nachfolgenden Schaltkreiselemente des Anpaßzweiges entsprechend so ausgebildet, daß der Hauptregelkreis durch den adaptiven Eingriff auf Strukturschwingungen nicht reagiert, dann können keine Grenzzyklusschwingungen bei Strukturresonanzfrequenzen, damit verbundener hoher Stellenergieverbrauch, keine gefährlichen Strukturbelastungen und oszillatorischen Instabilitäten auftreten.

Betrachtet man zum einfacheren Verständnis des Erfindungsgedankens einen an sich linearen Regelkreis, der im Normalfall keine wirksame Totzone enthalten soll, so wird ein zum Zwecke der Stabilisierung von Strukturschwingungen eingeführtes Totzoneglied im Hauptregelkreis zweckmäßigerweise so nachgeregelt, daß die Strukturschwingungsamplituden im Reglerausgangssignal die Ansprechschwellen gerade nicht überschreiten können. Die hochfrequenten oszillatorischen Signalanteile wirken dann wie ein sogenanntes "Dither-Signal" linearisierend über den vollen Totzonebereich, behindern aber niederfrequente Regelbewegungen, denen im Hauptkreis die oszillatorischen Signale überlagert sind, deswegen nicht, weil sich die Anpassung der Totzone infolge der Frequenzbereichsauswahl im Anpaßkreis nur nach den Amplituden der hochfrequenten Signalanteile richtet. Für Signale aus dem durch den Anpaßkreis bestimmten Frequenzspektrum ist die Verstärkung im Hauptregelkreis damit praktisch gleich Null, was dazu führt, daß eventuell zufällig angeregte Strukturschwingungen mit ihrer Eigendämpfung abklingen. Im gleichen Maß wird aber auch der Totzonebereich verkleinert und gleichbleibendes Regelverhalten sichergestellt. Mit Hilfe der erfindungsgemäßen Regeleinrichtung ist es daher möglich, an sich nur für die Regelung und Stabilisierung von starren Fahrzeugen geeignete, einfachere und erprobte Reglerkonzepte auch zur Regelung von elastischen Fahrzeugen einzusetzen, bei denen sonst erheblich aufwendigere Reglerstrukturen, wie etwa modale Regler erforderlich sind. Im vorliegenden Fall kann es auch zweckmäßig sein, die Reihenfolge der Schaltkreiselemente zu verändern, z.B. das fest eingestellte Totzoneglied im Anpaßkreis zwischen Frequenzbereichsfilter und Mittelwertbildner einzufügen, wodurch bewirkt werden kann, daß die Anpassung der Totzone erst in Kraft tritt, wenn bestimmte, durch die Ansprechschwellen vorgegebene unkritische Strukturschwingungsamplituden überschritten werden. Neben den in den Ausführungsbeispielen gezeigten Schaltkreiselementen kommen hier insbesondere Bandpässe, Bandsperren und dergleichen allein und in geeigneter Serien- und Parallelschaltung zur Trennung verschiedener Frequenzbereiche als Frequenzbereichsfilter und/oder Formfilter, und Spitzenwertgleichrichter als Mittelwertbildner infrage. Eine konsequente Weiterführung des Erfindungsgedankens führt zur Parallelschaltung vollständiger, für verschiedene Frequenzbereiche wirksamer Anpaßzweige und Überlagerung ihrer Eingriffe auf das Totzoneglied des Hauptkreises.

Die vorstehend beschriebene Stabilisierung von Strukturschwingungen in elastischen Fahrzeugen mittels eines adaptiven Totzonegliedes bei gleichzeitiger Verbesserung des Regelkreisverhaltens gegenüber herkömmlichen Systemen läßt sich auch noch auf eine andere Art erzielen. Da der Stabilisierungseffekt durch Absenkung der Regelkreisverstärkung für Strukturschwingungsamplituden im Totzonebereich bewirkt wird, ist es auch denkbar, mit Hilfe des Anpaß-Signals die Form der Kennlinie des Totzonegliedes zwischen den Ansprechschwellen im Sinne einer Verstärkungsanpassung zu verändern, etwa gemäß der Vorschrift (siehe Fig. 5):

$$Y = \begin{cases} X + Z \cdot |d_1| & \text{für} \quad X \leq -|d_1| \\ (1-Z) \cdot X & \text{für} \quad -|d_1| \leq X \leq +|d_2| \\ X - Z \cdot |d_2| & \text{für} \quad X \geq |d_2| \end{cases} \qquad (7)$$

wobei x die Eingangsgröße, y die Ausgangsgröße, $d_1$ und $d_2$ die untere bzw. obere feste Grenze des Anpaßbereiches und z den z.B. in einem der beschriebenen Anpaßzweige gebildeten Anpaßparameter ($\Delta$d) darstellen. Dabei soll

$z_1 \leqq z \leqq z_2$

sein, und insbesondere kann $z_1 = 0$ und $z_2 = 1$ gewählt werden. In Fig. 5 ist ein diesen Verhältnissen entsprechendes Kennlinienfeld des erfindungsgemäßen anpaßbaren Übertragungsgliedes variabler Verstärkung für drei Werte des Anpaßparameters (z = 0; 0.5; 1) schematisch dargestellt. Das Übertragungsglied stellt ein adaptives Proportionalglied dar mit variablem Proportionalitätsfaktor innerhalb des Bereichs $d_1 \leqq x \leqq d_2$ und festem Proportionalitätsfaktor außerhalb dieses Bereichs und entartet zu einem Totzoneglied nach Fig. 2 - 4 für den Wert z = 1 des Anpaßparameters. Die Realisierung eines solchen Funktions--Elements nach der Vorschrift von Gl. (7) in einem Digitalrechner liegt auf der Hand. Der Entwurf einer entsprechenden Analogschaltung mit Hilfe eines Multiplizierers bereitet dem Fachmann ebenfalls keine Schwierigkeiten.

Die letztgenannte Ausführungsform der Erfindung bietet sich z.B. zur Unterdrückung niederfrequenter Dauerschwingungen bei der Lageregelung von Fahrzeugen an. Die mathematische Beschreibung solcher Regelstrecken ist charakterisiert durch zweifach integrales Verhalten, was dem physikalischen Sachverhalt der Auswirkung von Stellkräften oder Momenten auf Position oder Winkellage Rechnung trägt. Wie jedem Regelungstechniker bekannt ist, sind in einem solchen System Grenzzyklusschwingungen unvermeidbar, wenn eine tote Zone im Regelkreis vorhanden ist und zur Erzielung hoher statischer Genauikgkeit zusätzlich ein integraler Regler eingesetzt wird. Wird nun der Anpaßzweig durch geeignete Wahl des Frequenzbereichsfilters als Tiefpaß so ausgebildet, daß er auf niederfrequente Schwingungsvorgänge des Fahrzeuges anspricht und das Adaptionssignal (z) dazu benutzt, um die Steigung im Kennlinienbereich $d_1 \leqq x \leqq d_2$ des Übertragungsgliedes nach Fig. 5 gegensinnig zu verändern, dann stellt sich ein Stabilitätszustand ein, der keine Grenzzyklusschwingungen mehr zuläßt, da ein Absinken der Kreisverstärkung unter die sog. "untere Stabilitätsgrenze" durch den Adaptionsvorgang verhindert wird. In Fig. 12 ist ein Anpaßzweig der vorstehend genannten Art dargestellt. Er besteht aus einem Tiefpaß zweiter Ordnung, einem Gleichrichter als Mittelwertbildner und einem weiteren Tiefpaß als Glättungsfilter, sowie einer geeigneten Verstärkungskennlinie, deren Form sich nach der Empfindlichkeit der Stabilitätsänderung an der unteren Stabilitätsgrenze richtet und im einfachsten Fall durch einen einfachen linearen Verstärkungsfaktor mit Begrenzung (L) realisiert werden kann.

Es ist leicht einzusehen, daß die Kombination verschiedener Merkmale der Erfindung, insbesondere eine Anpassung der Schwellenwerte $d_1$ und $d_2$ sowie der Kennliniensteigung im dazwischenliegenden Bereich ($d_1 \leqq x \leqq d_2$) in Abhängigkeit von Signalen (z, $\Delta$d), die aus dem Reglerausgangssignal und/oder der Regelabweichung in zugehörigen Anpaßzweigen gebildet werden, erhebliche zusätzliche Vorteile in der Praxis bringen kann.

Es folgt also, daß es zweckmäßig sein kann, auch Kombinationen gegensinniger Verstellungen, d.h. zunehmender Betrag der Schwellenwerte $d_1$ und $d_2$ und abnehmende Kennliniensteigung bei jeweils zunehmenden Werten des Anpaßsignals (z, $\Delta$d), für überlappende oder sich gegenseitig ausschließende Teilbereiche der Anpassung über ausgewählte Frequenzbereiche oder Amplitudenbereiche anzuwenden. Es sei ausdrücklich darauf hingewiesen, daß für den erfindungsgemäßen Zweck nicht nur die in der Regelungstechnik vorwiegend verwendeten relativ einfachen Ausführungsformen der wiederholt angesprochenen Filterarten einsetzbar sind, sondern auch alle in der Nachrichtentechnik gebräuchlichen aktiven und passiven Filternetzwerke, wie z.B. Tschebyscheff-Filter, Cauer-Parameter-Filter, Butterworth-Filter, "notch"-Filter und dergleichen. Ihre Verwendung ist sonst in der Regelungstechnik wegen der großen Phasenverluste im Durchlaßbereich oder ihrer Resonanzeigenschaften nur bedingt möglich. Die Verwendbarkeit im Rahmen der vorliegenden Erfindung liegt darin begründet, daß für das Anpaßsignal nur die Amplitudenverhältnisse, nicht aber die Phasenlage der Signale aus dem ausgewählten Frequenzbereichen maßgebend sind.

Mit der Erfindung ist dem Regelungstechniker eine Vielfalt von Möglichkeiten an die Hand gegeben, herkömmliche lineare und nichtlineare Regelsysteme bezüglich ihrer Genauigkeit, ihrem Stellenergiebedarf, ihrer Stabilität und ihrer Empfindlichkeit gegenüber Schwankungen der Betriebs- und Umweltbedingungen zu verbessern. Bei der Dimensionierung des Anpaßzweiges ist vom Signalspektrum des Hauptregelkreises auszugehen, und die Anpaßbedingungen richten sich nach den Amplitudenverhältnissen der Signale bei den jeweiligen Frequenzen oder in den entsprechend ausgewählten Frequenzbereichen. Aus der angestrebten Wirkungsweise nach der Erfindungsbeschreibung geht hervor, daß die Bandbreite des Anpaßsignals ($\Delta$d nach den Figuren 8 und 9) immer erheblich, d.h. größenordnungsmäßig um einen Faktor fünf bis zehn, niedriger sein sollte als die untere Eckfrequenz des für die Adaption ausgewählten und maßgebenden Frequenzbereichs im Hauptregelkreis.

**Patentansprüche**

1. Regeleinrichtung hoher Genauigkeit und/oder niedrigen Stellenergieverbrauchs mit einem einer Kräfte und/oder Momente erzeugenden Stellgliedanordnung (15) vorgeschalteten, nichtlinearen Übertragungsglied (14) mit variierbarer Totzone, einer von der Stellgliedanordnung beeinflußten Regelstrecke (16), einem aus der Regelgröße und einem vorgegebenen Sollwert eine Regelabweichung bildenden Vergleichsglied (11) und mindestens einem Anpaßzweig zur Gewinnung jeweils eines Anpaßsignales zur Variierung der beiden Ansprechschwellen ($d_1$, $d_2$) der Totzone, **dadurch gekennzeichnet,**

daß dem nichtlinearen Übertragungsglied mit variierbarer Totzone (Totzoneglied 14) an einem Eingang ein die Regelabweichung als Eingangssignal aufnehmender Regler (13) vorgeschaltet ist,

daß jeder Anpaßzweig mindestens ein Frequenzbereichsfilter (301), einen Mittelwertbildner (302) sowie einen Begrenzer (Parameter L) enthält,

daß die Eingänge der Anpaßzweige jeweils entweder mit dem Eingang (Regelabweichung) oder mit dem Ausgang des Reglers (13) und die Ausgänge der Anpaßzweige (Anpaßsignal $\Delta$d) mit einem weiteren Eingang des nichtlinearen Übertragungsgliedes verbunden sind

und daß Mittel zur Variierung der Ansprechschwellen ($d_1$, $d_2$) zwischen einer fest vorgebbaren unteren ($d_0$) und einer fest vorgebbbaren oberen Grenze ($d_0 + L$) im Sinne einer Addition des Betrages des Anpaßsignales ($\Delta$d, $0 \leq \Delta d \leq L$) zur unteren Grenze ($d_0$) vorgesehen sind.

2. Regeleinrichtung hoher Genauigkeit und/oder niedrigen Stellenergieverbrauchs mit einer Kräfte und/oder Momente erzeugenden Stellgliedanordnung (15), einer von dieser beeinflußten Regelstrecke (16), einem aus der Regelgröße und einem vorgegebenen Sollwert eine Regelabweichung bildenden Vergleichsglied (11) sowie einem zwischen diesem und der Stellgliedanordnung eingeschalteten Regler (13), **dadurch gekennzeichnet,**

daß der Stellgliedanordnung ein an einem Eingang das Reglerausgangssignal als ein Eingangssignal (x) aufnehmendes adaptives Proportionalglied (14) vorgeschaltet ist,

daß Mittel vorgesehen sind, um den Proportionalitätsfaktor des adaptivn Proportionalgliedes (14) innerhalb eines den Nullpunkt des Eingangssignales (x = 0) einschließenden, durch eine untere (x = $d_1$) und eine obere Grenze (x = $d_2$) definierten Anpaßbereiches zwischen einem unteren und einem oberen Grenzwert zu variieren,

daß mindestens ein Anpaßzweig vorgesehen ist, dessen Eingang entweder mit dem Eingang (Regelabweichung) oder mit dem Ausgang des Reglers und dessen Ausgang mit einem weiteren Eingang des adaptiven Proportionalgliedes verbunden ist, wobei das Ausgangssignal z ($z_1 \leq z \leq z_2$ ; z.B. $z_1$ = 0, $z_2$ =1) des Anpaßzweiges den Proportionalitätsfaktor im Sinne einer gegenseitigen Abhängigkeit bestimmt,

und daß der Anpaßzweig mindestens ein Frequenzbereichsfilter einen Mittelwertbildner sowie einen Begrenzer (oberer Grenzwert $z_2$) enthält.

3. Regeleinrichtung nach einem der Ansprüche 1 oder 2, dadurch **gekennzeichnet,** daß die Frequenzbe-

EP 0 258 333 B1

reichsfilter die Übertragungsfunktion des Reglers (13) ganz oder teilweise enthalten.

4. Regeleinrichtung nach Anspruch 1, 2 oder 3, dadurch **gekennzeichnet,** daß der oder die Anpaßzweige aus einem Hochpaß erster Ordnung als Frequenzbereichsfilter (301), einem Doppelweggleichrichter als Mittelwertbildner (302), einem Tiefpaß erster Ordnung als Formfilter (303), einem Verstärker mit Amplitudenbegrenzung als Aufschaltfunktion (304) und einem Totzoneglied (305) mit fest vorgegebenen Ansprechschwellen gebildet werden.

5. Regeleinrichtung nach Anspruch 1, 2 oder 3, dadurch **gekennzeichnet,** daß der oder die Anpaßzweige aus einem Hochpaß zweiter Ordnung als Frequenzbereichsfilter (301), einem Quadrierer als Mittelwertbildner (302), einem Tiefpaß zweiter Ordnung als Formfilter (303), einer Quadratwurzelfunktion als Aufschaltfunktion (304) und einem Totzoneglied (305) mit fest vorgegebenen Ansprechschwellen und Amplitudenbegrenzung gebildet werden.

6. Regeleinrichtung nach einem der Ansprüche 1 bis 5, dadurch **gekennzeichnet,** daß die Ansprechschwellen im anpaßbaren Totzoneglied bzw. adaptiven Proportionalglied (14) des Hauptregelkreises über Aufschaltfunktionen des Anpaßzweiges so einstellbar sind, daß die Ansprechschwellen immer proportional sind zu einem statistischen Erwartungswert oder einem Effektivwert des Reglerausgangssignals über einen oder mehrere ausgewählte Frequenzbereiche.

7. Regeleinrichtung nach einem der vorhergehenden Ansprüche, dadurch **gekennzeichnet,** daß das Proportionalglied bzw. Totzoneglied (14) mit anpaßbaren Ansprechschwellen einen ersten, ein Eingangssignal (x) aufnehmenden Verstärker (201) enthält, dessen Ausgangssignal über zwei Potentiometer (203,204) und jeweils an deren Abgriff angeschlossene, gegensinnig geschaltete Dioden (205,206) einmal auf den Eingang zuführbar und zum anderen in einem zweiten Verstärker (202) mit dem Eingangssignal (x) summierbar ist, wobei am jeweils anderen Ende der Potentiometer (203,204), z.B. über einen dritten (207) und vierten Verstärker (208), den negativen Schwellenwerten ($d_0$ + $\Delta d$) entsprechende Signale aufschaltbar sind.

8. Regeleinrichtung nach einem der vorhergehenden Ansprüche, dadurch **gekennzeichnet,** daß die Funktionselemente der Regeleinrichtung wie Reglernetzwerke, Totzoneglieder, Filter, lineare und/oder nichtlineare Kennlinien ganz oder teilweise durch funktionsmäßig äquivalente Algorithmen in einer fest verdrahteten oder programmierbaren Digitalelektronik realisierbar sind.

## Claims

1. Control device of high precision and/or low switching-energy consumption having, on the input side of a control element arrangement (15) which produces forces and/or torques, a non-linear transfer element (14) with variable dead zone, a control path (16) affected by the control element arrangement, a comparator member (11), which establishes a control deviation from the control value and a specified nominal value, and at least one matching path for obtaining a respective matching signal for the variation of both response thresholds ($d_1$, $d_2$) of the dead zone, characterised in that the non-linear transfer member with variable dead zone (dead-zone element 14) has on its input side, on one input, a controller (13), which receives the control deviation as input signal;

that each matching branch has at least one frequency-range filter (301), a mean-value unit (302) as well as a limiter (parameter L);

that the inputs of the matching branches are connected respectively either to the input (control deviation) or the output of the controller (13), and the outputs of the matching branches (matching signal $\Delta d$) are connected to a further input of the non-linear transfer element; and

that means are provided for variation of the response thresholds ($d_1$, $d_2$ ) between a fixed specified lower ($d_0$) and a fixed specified upper limit ($d_0$ + L) in the sense of an addition of the amount of the matching signal ($\Delta d$, $0 \leq \Delta d \leq L$) to the lower limit ($d_0$).

2. Control device of high precision and/or low switching-energy consumption, having a control element arrangement (15), which produces forces and/or torques, a thereby affected control path (16), a

11

EP 0 258 333 B1

comparator (11), which establishes a control deviation from the control value and a specified nominal value, as well as a controller (13), switched between the latter and the control element arrangement, characterised in that the control element arrangement has on its input side an adaptive proportional element (14), which receives the controller output signal as an input signal ($x$) at one input;

that means are provided for variation of the proportionality factor of the adaptive proportional element (14) between a lower and an upper threshold value within a matching range defined by a lower ($x = d_1$) and an upper limit ($x = d_2$) and including the zero point of input signal ($x = 0$);

that at least one matching branch is provided, the input of which is either connected to the input (control deviation) or the output of the controller, and the output of which is connected to a further input of the adaptive proportional element, the output signal z ($z_1 \leq z \leq z_2$ ; for example $z_1 = o$, $z_2 = 1$) of the matching branch determining the proportionality factor in the sense of counter-directional dependence;

and that the matching branch has at least one frequency-range filter, one mean-value unit as well as one limiter (upper threshold value $z_2$).

**3.** Control device according to one of claims 1 or 2, characterised in that the frequency-range filters totally or partially include the transfer function of the controller (13).

**4.** Control device according to claim 1, 2 or 3, characterised in that the matching branch(es) is/are formed by one first degree high pass as frequency-range filter (301), a double-path rectifier as mean-value unit (302), a first degree low pass as form filter (303), an amplifier with amplitude limitation as add-on function (304) and a dead-zone element (305) with fixed specified response thresholds.

**5.** Control device according to claim 1, 2 or 3, characterised in that the matching branch(es) is/are formed by a second degree high pass as frequency-range filter (301), a squaring means as a mean-value unit (302), a second degree low pass as a form filter (303), a square-root function as add-on function (304) and a dead-zone element (305) with fixed specified response thresholds and amplitude limitation.

**6.** Control device according to one of claims 1 to 5, characterised in that the response thresholds are adjustable in respectively the matching dead-zone member or the adaptive proportional element (14) of the main control circuit via add-on functions of the matching path, so that the response thresholds are always proportional to a statistical expectation value or an effective value of the controller output signal over one or several selected frequency ranges.

**7.** Control device according to one of the above claims, characterised in that the proportional element or the dead-zone element (14) with matching response thresholds comprises a first amplifier (201), which receives an input signal ($x$), the output signal of which is fed, via two potentiometers (203, 204) and respective opposingly connected diodes (205, 206) connected to the output of the latter, to its input and is also summed with the input signal ($x$) in a second amplifier (202), signals corresponding to the negative threshold values ($d_0 + \Delta d$) being switched to the respective other end of the potentiometers (203, 204) for example via a third (207) and fourth amplifier (208).

**8.** Control device according to one of the above claims, characterised in that the operational elements of the control device, such as control networks, dead-zone elements, filters, linear and/or non-linear characteristics, are fully or partially realised by operationally equivalent algorithms in a fixed wired or programmable digital electronics.

**Revendications**

**1.** Dispositif de réglage de grande précision et/ou à faible consommation d'énergie de commande, comprenant un élément de transmission (14) non linéaire à plage d'insensibilité variable, monté en série en amont d'un élément de commande (15) produisant des forces et/ou des couples, un système à régler (16) influencé par l'élément de commande, un élément comparateur (11), formant un écart de réglage à partir de la grandeur réglée et d'une valeur de consigne prédéterminée, et au moins une branche d'adaptation pour l'obtention chaque fois d'un signal d'adaptation pour faire varier les deux

EP 0 258 333 B1

seuils de réponse ($d_1$, $d_2$) de la plage d'insensibilité, caractérisé par le fait

qu'un régulateur (13), recevant l'écart de réglage en tant que signal d'entrée, est monté en amont d'une entrée de l'élément de transmission non linéaire à plage d'insensibilité variable (élément à zone d'insensibilité 14),

que chaque branche d'adaptation contient au moins un filtre (301) de gamme de fréquence, un dispositif (302) de calcul de valeur moyenne, ainsi qu'un limiteur (paramètre L),

que les entrées des branches d'adaptation sont connectées chaque fois soit à l'entrée (écart de réglage) soit à la sortie du régulateur (13) et les sorties des branches d'adaptation (signal d'adaptation $\Delta d$) sont connectées à une autre entrée de l'élément de transmission non linéaire,

et qu'il est prévu des moyens pour faire varier les seuils de réponse ($d_1$, $d_2$) entre une limite inférieure ($d_0$), susceptible d'être prédéterminée de manière précise, et une limite supérieure ($d_0 + L$) susceptible d'être prédéterminée de manière précise, dans le sens d'une addition de la valeur du signal d'adaptation ($\Delta d$, $0 \leq \Delta d \leq L$) à la limite inférieure ($d_0$).

2. Dispositif de réglage de grande précision et/ou à faible consommation d'énergie de commande, comprenant un élément de commande (15) produisant des forces et/ou des couples, un système à régler (16) influencé par l'élément de commande, un élément comparateur (11), formant un écart de réglage à partir de la grandeur réglée et d'une valeur de consigne prédéterminée, ainsi qu'un régulateur (13) intercalé entre l'élément comparateur et l'élément de commande, caractérisé par le fait

qu'un élément proportionnel (14) adaptatif, recevant à une entrée le signal de sortie du régulateur en tant que signal d'entrée ($x$), est monté en amont de l'élément de commande,

qu'il est prévu des moyens pour faire varier le coefficient de proportionnalité de l'élément proportionnel (14) adaptatif entre une valeur limite inférieure et une valeur limite supérieure, à l'intérieur d'une plage d'adaptation entourant le point zéro du signal d'entrée ($x = 0$) et définie par une limite inférieure ($x = d_1$) et une limite supérieure ($x = d_2$),

qu'au moins une branche d'adaptation est prévue, dont l'entrée est connectée soit à l'entrée (écart de réglage) soit à la sortie du régulateur, et dont la sortie est connectée à une autre entrée de l'élément proportionnel adaptatif, le signal de sortie $z$ ($z_1 \leq z \leq z_2$ ; par exemple $z_1 = 0$, $z_2 = 1$) de la branche d'adaptation déterminant le coefficient de proportionnalité dans le sens d'une dépendance contraire,

et que la branche d'adaptation contient au moins un filtre de gamme de fréquence, un dispositif de calcul de valeur moyenne, ainsi qu'un limiteur (valeur limite supérieure $z_2$).

3. Dispositif de réglage selon l'une des revendications 1 ou 2, caractérisé par le fait que les filtres de gamme de fréquence contiennent en totalité ou en partie la fonction de transmission du régulateur (13).

4. Dispositif de réglage selon les revendications 1, 2 ou 3, caractérisé par le fait que la branche ou les branches d'adaptation sont constituées d'un filtre passe-haut de premier ordre en tant que filtre (301) de gamme de fréquence, d'un redresseur à deux alternances en tant que dispositif (302) de calcul de valeur moyenne, d'un filtre passe-bas de premier ordre en tant que filtre de mise en forme (303), d'un amplificateur avec limitation d'amplitude en tant que fonction d'immixtion, et d'un élément (305) à plage d'insensibilité avec des seuils de réponse prédéterminés de manière précise.

5. Dispositif de réglage selon les revendications 1, 2 ou 3, caractérisé par le fait que la branche ou les branches d'adaptation sont constituées d'un filtre passe-haut de deuxième ordre en tant que filtre (301) de gamme de fréquence, d'un élément à quadrature en tant que dispositif (302) de calcul de valeur moyenne, d'un filtre passe-bas de deuxième ordre en tant que filtre de mise en forme (303), d'une fonction de racine carrée en tant que fonction d'immixtion (304), et d'un élément (305) à plage d'insensibilité avec des seuils de réponse prédéterminés de manière précise et avec limitation d'amplitude.

6. Dispositif de réglage selon l'une des revendications 1 à 5, caractérisé par le fait que les seuils de réponse dans l'élément adaptatif à plage d'insensibilité/l'élément proportionnel adaptatif (14) du circuit de réglage principal peuvent être réglés par des fonctions d'immixtion de la branche d'adaptation de manière telle que les seuils de réponse soient toujours proportionnels à une valeur statistique prévue ou une valeur effective du signal de sortie du régulateur, sur une ou plusieurs gammes de fréquence sélectionnées.

7. Dispositif de réglage selon l'une des revendications précédentes, caractérisé par le fait que l'élément

13

proportionnel/l'élément à plage d'insensibilité (14) à seuils de réponse variables contient un premier amplificateur (201) recevant un signal d'entrée (x), dont le signal de sortie peut être amené d'une part à l'entrée, par deux potentiomètres (203, 204) et deux diodes (205, 206) montées tête-bêche et reliées respectivement aux bornes des potentiomètres, et peut être totalisé d'autre part avec le signal d'entrée (x) dans un deuxième amplificateur (202), des signaux correspondant aux valeurs seuils ($d_0 + \Delta d$) négatives pouvant être appliqués chaque fois à l'autre extrémité des potentiomètres (203, 204), par exemple par un troisième (207) et un quatrième (208) amplificateur.

8.  Dispositif de réglage selon l'une des revendications précédentes, caractérisé par le fait que les éléments fonctionnels du dispositif de réglage, tels que les réseaux de régulateurs, éléments à plage d'insensibilité, filtres, courbes caractéristiques linéaires et/ou non linéaires, peuvent être réalisés en totalité ou en partie par des algorithmes équivalents du point de vue de la fonction, dans un système électronique numérique programmable ou câblé de manière fixe.

FIG. 1

FIG. 2

FIG. 3

FIG. 4

FIG. 5

SOLLWERT

ISTWERT REGELABWEICHUNG

14 15

MESS-
GLIED

Σ

11

REGLER 13

TOT-
ZONE-
GLIED

STELL-
GLIED

12

ANPASSZWEIG

r

FREQUENZ-
BEREICHS-
FILTER

MITTEL-
WERT-
BILDG.

FORM-
FILTER

AUF-
SCHALT-
FUNKT.

TOT-
ZONE-
GLIED

Δd

301 302 303 304 305

16

REGELSTRECKE

FIG.6

STÖRUNGEN

SOLLWERT

ISTWERT REGELABWEICHUNG

14 15

MESS-
GLIED

Σ

11

REGLER 13

TOT-
ZONE-
GLIED

STELL-
GLIED

12

ANPASSZWEIG

r

FREQUENZ-
BEREICHS-
FILTER

MITTEL-
WERT-
BILDG.

FORM-
FILTER

AUF-
SCHALT-
FUNKT.

TOT-
ZONE-
GLIED

Δd

301 302 303 304 305

16

REGELSTRECKE

FIG. 7

STÖRUNGEN

18

FIG. 8

FIG. 9

Fig. 10

Fig. 11

PWPF-
Modulator

Fig. 12